Europäisches Patentamt

European Patent Office

Office européen des brevets

(19)

(11)  EP 0 752 304 A1

(12)  **EUROPÄISCHE PATENTANMELDUNG**

(43) Veröffentlichungstag:
     08.01.1997  Patentblatt 1997/02

(51) Int. Cl.⁶: **B29C 45/82**, B29C 45/76

(21) Anmeldenummer: 96108063.7

(22) Anmeldetag: 21.05.1996

(84) Benannte Vertragsstaaten:
     AT DE IT

(30) Priorität: 04.07.1995 DE 19524395

(71) Anmelder: Battenfeld GmbH
     D-58540 Meinerzhagen (DE)

(72) Erfinder: Holzschuh, Johann
     58540 Meinerzhagen (DE)

(74) Vertreter: Gosdin, Michael, Dr.
     Battenfeld Service GmbH,
     Scherl 10
     58540 Meinerzhagen (DE)

(54)  **Hydraulisches Betriebssystem für Kunststoffverarbeitungsmaschinen, insbesondere für Spritzgiessmaschinen**

(57)  Die Erfindung betrifft ein hydraulisches Betriebssystem für Kunststoffverarbeitungsmaschinen, insbesondere für Spritzgießmaschinen, mit einer Hydraulikpumpe (1), die von einem Elektromotor (2) angetrieben wird, mindestens einem Hydraulikantrieb (3, 4, 5), einem hydraulischen Leitungsnetz (6), das Hydraulikpumpe (1) und Hydraulikantriebe (3, 4, 5) verbindet, und einer Maschinensteuerung (7), wobei die Hydraulikpumpe (1) als Stetig- bzw. Konststantförderpumpe ausgelegt ist und wobei der Elektromotor (2) - von der Maschinensteuerung (7) entsprechend beeinflußt - mit variabler Drehzahl betrieben wird. Um auf den Einsatz eines kostenintensiven Druckregelventil verzichten zu können und so eine kostengünstigere Spritzgießmaschine bereitstellen zu können, ist erfindungsgemäß vorgesehen, daß die Maschinensteuerung (7) den programmgemäß benötigten aktuellen Hydraulik-Volumenstrom (Q) dem Elektromotor (2) als einen Drehzahlsollwert (n) und den programmgemäß benötigten aktuellen Hydraulik-Druck (p) dem Elektromotor (2) als einen Drehmomentensollwert (M) vorgibt, wobei die zyklusgemäßen Solldaten für Drehzahl (n) und Drehmoment (M) bzw. für Hydraulik-Volumenstrom (Q) und Hydraulik-Druck (p) in einem Speichermittel (8) hinterlegt sind, auf das die Maschinensteuerung (7) zugreifen kann.

Fig.

EP 0 752 304 A1

## Beschreibung

Die Erfindung bezieht sich auf ein hydraulisches Betriebssystem für Kunststoffverarbeitungsmaschinen, insbesondere für Spritzgießmaschinen, mit

- einer Hydraulikpumpe, die von einem Elektromotor angetrieben wird,

- mindestens einem Hydraulikantrieb,

- einem hydraulischen Leitungsnetz, das Hydraulikpumpe und Hydraulikantriebe verbindet, und

- einer Maschinensteuerung,

wobei die Hydraulikpumpe als Stetig- bzw. Konststantförderpumpe ausgelegt ist und
wobei der Elektromotor - von der Maschinensteuerung entsprechend beeinflußt - mit variabler Drehzahl betrieben wird.

Um die einzelnen Verbraucher (Schließzylinder, Schneckenantrieb, Spritzzylinder etc.) einer hydraulisch betriebenen Spritzgießmaschine mit Hydraulik-Drucköl zu versorgen, ist ein Betriebssystem für den Hydraulikkreislauf erforderlich.

Ein solches hydraulisches Betriebssystem einer Spritzgießmaschine ist bereits aus der DE-OS 22 63 797 bekannt. Um möglichst energiearm zu arbeiten, ist dort vorgesehen, daß die Maschine einen Elektromotor mit variabler Geschwindigkeit aufweist, der für den Antrieb einer hydraulischen Pumpe vorgesehen ist. Der Antriebsmotor wird dabei so betrieben, daß seine Leistungsaufnahme bezüglich Drehgeschwindigkeit und Drehmoment dem jeweils benötigten hydraulischen Energiebedarf angepaßt wird. Der mit variabler Drehgeschwindigkeit betreibbare elektrische Antriebsmotor für die Hydro-Pumpe wird also so angepaßt, daß er mit Drehgeschwindigkeiten und Drehmomenten betrieben werden kann, die jeweils direkt gemäß den hydraulischen Anforderungen der Spritzgießmaschinen wahrend eines Spritzgießzyklus variiert werden.

Ein weiterentwickeltes Betriebssystem ist aus der DE 43 35 328 A1 bekannt. Diese Schrift offenbart ein hydraulisches Betriebssystem für eine Spritzgießmaschine mit einer Vielzahl von hydraulischen Antrieben. Diese sind über ein hydraulisches Leitungsnetz und Ventile in wählbarer Anzahl und Reihenfolge verbindbar. Für die Erzielung eines hohen Wirkungsgrades des Antriebs ist vorgesehen, daß die Hydro-Pumpe als Stetig- bzw. Konstant-Förderpumpe mit ausreichendem Förderstrom bzw. -druck ausgelegt ist und daß die Pumpe über einen vorgegebenen Drehzahlbereich drehzahlvariabel regelbar ist. Weiterhin ist der maximale Förderstrom bzw. -druck an die maximale Verbrauchsmenge bzw. -druck der Hydraulikantriebe anpaßbar und die Drehzahl des Elektromotors proportional zur Verbrauchsmenge bzw. -druck der jeweils in Betrieb befindlichen Hydraulikantriebe regelbar. Aus dieser Offenbarung ist weiterhin bekannt, daß der erwähnten hydraulischen Stetig- bzw. Konstant-Förderpumpe ein elektrisch ansteuerbares Druckbegrenzungs- und Entlastungsventil bzw. Proportionaldruckbegrenzungsventil zugeordnet ist, das eine Verbrauchsdruckregelung sichert.

Nachteilhaft bei dieser Ausführung ist, daß dieses Druckregelventil einen wesentlichen Kostenfaktor im hydraulischen Betriebssystem darstellt. Damit sind hohe Kosten bei der konstruktiven Umsetzung des bekannten Betriebssystems bedingt.

Der Erfindung liegt daher die **Aufgabe** zugrunde, ein hydraulisches Betriebssystem für eine Kunststoffverarbeitungsmaschine, insbesondere für eine Spritzgießmaschine, zu schaffen, das es bei der vollen Nutzung der aus dem Stand der Technik bekannten Vorteile ermöglicht, eine kostengünstigere Konzeption zu realisieren, die ein teures Druckregelventil entbehrlich macht.

Die **Lösung** dieser Aufgabe durch die Erfindung ist dadurch gekennzeichnet, daß die Maschinensteuerung (7)

- den programmgemäß benötigten aktuellen Hydraulik-Volumenstrom (Q) dem Elektromotor (2) als einen Drehzahlsollwert (n) und

- den programmgemäß benötigten aktuellen Hydraulik-Druck (p) dem Elektromotor (2) als einen Drehmomentensollwert (M) vorgibt,
wobei die zyklusgemäßen Solldaten für Drehzahl (n) und Drehmoment (M) bzw. für Hydraulik-Volumenstrom (Q) und Hydraulik-Druck (p) in einem Speichermittel (8) hinterlegt sind, auf das die Maschinensteuerung (7) zugreifen kann.

Es wird also sichergestellt, daß der die Hydro-Pumpe antreibende Elektromotor seitens seiner Steuerung exakt diejenigen Leistungsvorgaben erhält, die zwar einerseits ausreichen, um die hydraulischen Verbraucher ausreichend zu versorgen, die es aber andererseits vermeiden, daß unnötige Hydro-Energie erzeugt wird. Da also weder zu viel noch zu wenig Hydro-Energie zur Verfügung gestellt wird, entfällt die bisher im Stand der Technik vorhandene Notwendigkeit, erst durch aufwendige Mittel (Druckregelventile) wieder eine Anpassung - ggf. mit systembedingter "Vernichtung" von Hydro-Energie - zu bewerkstelligen.

Insbesondere ist gemäß einer ersten Weiterbildung der Erfindung vorgesehen, daß die jeweiligen Drehmomentensollwerte (M) als Drehmomentengrenzwerte vorgegeben werden, die nicht überschritten werden dürfen, wodurch der jeweilige Hydraulik-Druck (p) begrenzt wird.

Im Zusammenwirken der Drehzahlregelung mit der Drehmomentenbegrenzung ist es weiterhin möglich, eine Leistungsregelung bzw. Leistungsbegrenzung zu realisieren. Vorgesehen ist daher, daß in der Maschinensteuerung (7) die aktuelle Leistung (P) gemäß der

Beziehung

$$P = p \times Q \text{ und/oder } P = n \times M$$

aus den zyklusgemäßen Solldaten für Druck (p) und Hydraulik-Volumenstrom (Q) bzw. aus Drehzahl (n) und Drehmoment (M) gebildet und der Regelung des Elektromotors (2) zugrundegelegt wird, wobei die Maschinensteuerung (7) auf die hinterlegten Daten im Speichermittel (8) zurückgreift.

Gemäß weiterer Weiterbildungen der Erfindung ist vorgesehen, daß die jeweilige aktuell benötigte Leistung (P) als Leistungsgrenzwert vorgegeben wird, der nicht überschritten werden darf, wodurch die Leistung (P) begrenzt wird.

Weiterhin kann die Maschinensteuerung (7) einen Alarm auslösen, falls bei der Ermittlung der Leistung (P) ein Wert festgestellt wird, der über einem voreingestellten Maximalwert liegt.

Schließlich ist vorgesehen, daß in der Maschinensteuerung (7) die über einen Arbeitszyklus aufgenommene Energie (W) gemäß der Beziehung

$$W = \int P \, dt$$

aus den berechneten Leistungswerten (P) über der Zeit (t) ermittelt und ausgegeben wird.

Damit ist es möglich, bereits auf Grund der für den Spritzzyklus vorgewählten Sollwerte eine Vorausberechnung der Leistung zu machen. Ergibt diese Berechnung in einem Zeitabschnitt des Zyklusses bereits einen Leistungswert, der über einem vom Maschinenhersteller definierten maximalen Wert liegt, kann die Maschinensteuerung dies dem Einrichter melden und einen alternativen Wert vorschlagen, der dann nicht mehr über dem maximalen Leistungswert liegt.

Mit Hilfe der berechneten Werte für die Leistung in den einzelnen Zeitabschnitten und den ebenfalls vorgewählten bzw. sich im Betrieb ergebenden Zeiten für die einzelnen Abschnitte ist es also möglich, eine Vorausberechnung für die Energie-Aufnahme der Maschine durchzuführen. Durch Veränderung einzelner Sollwerte ist es damit möglich, eine bestmögliche Maschineneinstellung zu finden und auf diese Weise die Energieaufnahme im Sinne einer Kostensenkung zu minimieren.

Um neben der vom Pumpenantrieb aufgenommenen Energie auch noch die Heizenergie vorausberechnen zu können, wird der in der Maschinensteuerung zu hinterlegende Zahlenwert für die installierte Heizleistung herangezogen. Die Vorausberechnung stützt sich dabei auf einen Erfahrungswert für die durchschnittliche Einschaltdauer der Heizung (z. B. 25 %). Eine genaue Berechnung kann zu einem späteren Zeitpunkt während des Betriebs der Spritzgießmaschine mit einem dann vorliegenden genauen Wert für die Einschaltdauer erfolgen.

Als vorteilhafte Weiterbildung der Erfindung ist vorgesehen, daß die Hydraulikpumpe (1) eine Innenzahnradpumpe ist.

Der Elektromotor (2) kann als vektorgeregelter Drehstromkurzschlußläufermotor oder als frequenzgeregelter Drehstromkurzschußläufermotor ausgebildet sein. Er kann auch ein Drehstromservomotor sein.

Insbesondere kann vorgesehen werden, daß der Elektromotor (2) über einen oder mehrere programmierbare, auf die Drehzahlregelung und/oder die Drehmomentenregelung wirkende Rampenbildner angesteuert wird.

Konstruktiv vorteilhaft ist es, wenn die Hydraulikpumpe (1) unmittelbar an den Elektromotor (2) angeflanscht oder mit diesem über einen Pumpenträger verbunden ist.

Regelungstechnisch günstig ist es, wenn die Drehzahlregelung und/oder die Drehmomentenregelung des Elektromotors (2) einer Soll/Istwert-Steuerung unterliegt, die gegebenenfalls wiederum durch Sensoren an den Hydraulikantrieben (3, 4, 5) beeinflußbar ist.

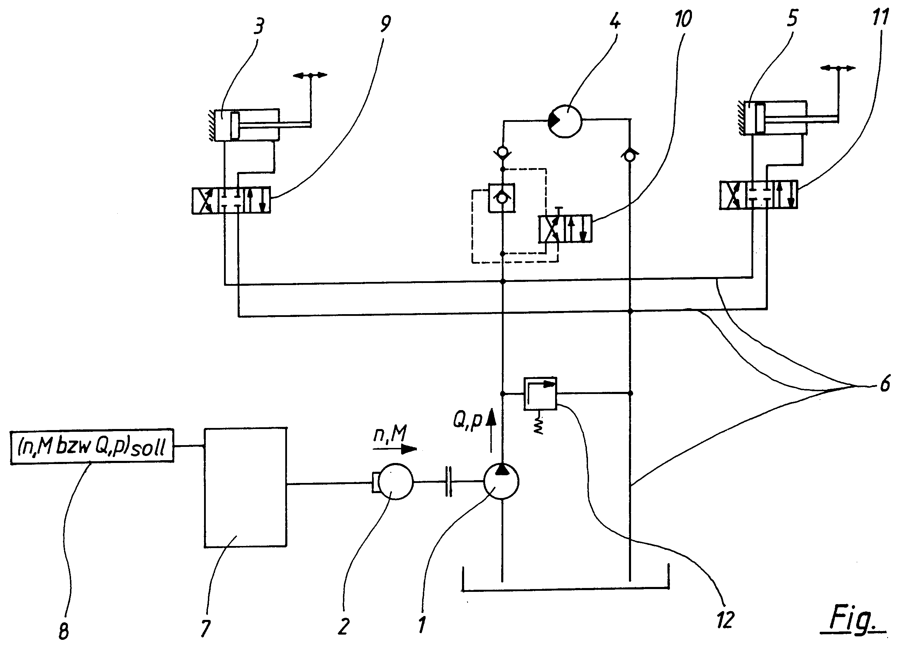

In der Zeichnung ist ein erfindungsgemäßes Ausführungsbeispiel dargestellt. Die - einzige - Figur zeigt schematisch ein hydraulisches Betriebssystem einer Spritzgießmaschine.

Das Betriebssystem weist eine Hydraulikpumpe 1 auf, die über eine Kupplung mit dem Elektromotor 2 verbunden ist. Der Motor 2 gibt an die Pumpe 1 ein definiertes Drehmoment M bei einer Drehzahl n ab. Die Pumpe 1 ihrerseits saugt aus einem Öltank Hydrauliköl an und pumpt dieses mit von Drehzahl n und Drehmoment M abhängigem Druck p mit einer Fördermenge Q weiter.

Die Pumpe 1 steht mit einem hydraulischen Leitungsnetz 6 in Verbindung. So gelangt Hydrauliköl über die Leitung 6 von der Pumpe 1 zu dem Schließ-Kolben-Zylinder-System 3 (Hydraulikantrieb), das die Öffnungs- und Schließbewegung der Werkzeugsaufspannplatten der Spritzgießmachine bewerkstelligt. Die konkrete aktuelle Strömungsrichtung sowie der Verschluß der Leitung wird durch das Wegeventil 9 bestimmt, das wiederum von der - nicht dargestellten - Maschinensteuerung betätigt wird. Analog dazu wird der Schneckenantriebs-Hydromotor 4 und das Spritz-Kolben-Zylinder-System 5 mit Hydrauliköl beaufschlagt, wobei die Wegeventile 10 und 11 steuernd eingreifen.

Die Steuerung bzw. Regelung des elektrischen Antriebsmotors 2 erfolgt durch die Maschinensteuerung 7. In dieser wird das Zyklusprogramm für den gesamten Spritzgießzyklus gefahren. In einem mit der Maschinensteuerung 7 in Verbindung stehenden Speichermittel 8 sind Solldaten für die Drehzahl (n) und das Drehmoment (M) bzw. für den Hydraulik-Volumenstrom (Q) und den Hydraulik-Druck (p) hinterlegt, und zwar für jede Phase des Spritzgießzyklus.

Damit ist das Betriebssystem in der Lage, für jede aktuelle Situation des Spritzgießzyklus die optimalen Sollwerte für Drehzahl und Drehmoment des Motors 2 bzw. für den Volumenstrom und den Druck der Pumpe 1 aus dem Speicher 8 auszulesen und in der Maschinensteuerung 7 so zu verarbeiten, daß Motor bzw. Pumpe genau mit der Leistung betrieben werden, die für einen optimalen Prozeß erforderlich ist. Es wird also keine überschüssige Hydro-Energie erzeugt, die erst wieder - wie beim Stand der Technik - mittels eines Druckregelventils abgebaut werden muß.

Im Gegenteil ist aus Sicherheitsgründen lediglich ein einfaches und preiswertes Druckbegrenzungsventil 12 vorgesehen, über das bei unzulässig hohem Druck im Leitungsnetz 6 Hydrauliköl in den Öltank abfließen kann.

Das erfindungsgemäße hydraulische Betriebssystem benutzt zur Regelung des hydraulischen Druckes die Regelung des Drehmomentes des Pumpenantriebsmotors 2. Die Druckregelung im System arbeitet nach dem Prinzip der Druckbegrenzung. Jedem Hydraulikdruckwert (z. B. in Schritten von 1 bar) wird für jede mögliche Motordrehzahl (z. B. in %-Schritten) ein Drehmomentengrenzwert zugeordnet. Die elektrischen Steuerdaten für die Drehmomentenbegrenzung werden in der Maschinensteuerung 7 bzw. im Speicher 8 dauerhaft hinterlegt. Die Drehmomentenbegrenzung kann wahlweise an- oder abgewählt werden. Wie bereits gesagt, wird zur Absicherung des Maximaldrucks im Betriebssystem lediglich das federbelastete Druckbegrenzungsventil 12 vorgesehen.

Das Betriebssystem eignet sich für alle hydraulischen Maschinen, z. B. für Spritzgießmaschinen, Spritzpressen, Pressen etc., deren einzelne Bewegungen zeitlich nacheinander ablaufen.

Für Bewegungen, die zeitlich völlig gleichzeitig oder zumindest teilweise gleichzeitig ablaufen, wird zur Realisierung von z. B. zwei unabhängigen Bewegungen der Hydraulikantriebe 3, 4, 5 ein - nicht dargestellter - Ölstromteiler eingesetzt, dessen festes Teilungsverhältnis dem Verhältnis der Einzelströme der beiden Verbraucher entspricht. Ein Stromteiler dieser Art ist ein äußerst wartungsarmes und kostengünstiges hydraulisches Bauelement.

Für den Fall, daß das Teilungsverhältnis variabel sein soll, wird anstelle eines Stromteilers in einer der beiden Verbraucherleitungen ein Mengenregler angeordnet, der manuell oder elektrisch verstellbar sein kann.

### Bezugszeichenliste:

| 1 | Hydraulikpumpe |
|---|---|
| 2 | Elektromotor |
| 3, 4, 5 | Hydraulikantriebe |
| 3 | Schließ-Kolben-Zylinder-System |
| 4 | Schneckenantriebs-Hydromotor |
| 5 | Spritz-Kolben-Zylinder-System |
| 6 | hydraulisches Leitungsnetz |
| 7 | Maschinensteuerung |
| 8 | Speichermittel |
| 9, 10, 11 | Wegeventile |
| 12 | Druckbegrenzungsventil |
| n | Drehzahl des Elektromotors |
| M | Drehmoment des Elektromotors |
| p | Hydraulik-Druck der Hydraulikpumpe |

Q     Hydraulik-Volumenstrom der Hydraulikpumpe

## Patentansprüche

1. Hydraulisches Betriebssystem für Kunststoffverarbeitungsmaschinen, insbesondere für Spritzgießmaschinen, mit

   - einer Hydraulikpumpe (1), die von einem Elektromotor (2) angetrieben wird,

   - mindestens einem Hydraulikantrieb (3, 4, 5),

   - einem hydraulischen Leitungsnetz (6), das Hydraulikpumpe (1) und Hydraulikantriebe (3, 4, 5) verbindet, und

   - einer Maschinensteuerung (7),

   wobei die Hydraulikpumpe (1) als Stetig- bzw. Konststantförderpumpe ausgelegt ist und wobei der Elektromotor (2) - von der Maschinensteuerung (7) entsprechend beeinflußt - mit variabler Drehzahl betrieben wird, **dadurch gekennzeichnet,** daß die Maschinensteuerung (7)

   - den programmgemäß benötigten aktuellen Hydraulik-Volumenstrom (Q) dem Elektromotor (2) als einen Drehzahlsollwert (n) und

   - den programmgemäß benötigten aktuellen Hydraulik-Druck (p) dem Elektromotor (2) als einen Drehmomentensollwert (M) vorgibt,

   wobei die zyklusgemäßen Solldaten für Drehzahl (n) und Drehmoment (M) bzw. für Hydraulik-Volumenstrom (Q) und Hydraulik-Druck (p) in einem Speichermittel (8) hinterlegt sind, auf das die Maschinensteuerung (7) zugreifen kann.

2. Hydraulisches Betriebssystem nach Anspruch 1, dadurch gekennzeichnet, daß die jeweiligen Drehmomentensollwerte (M) als Drehmomentengrenzwerte vorgegeben werden, die nicht überschritten werden dürfen, wodurch der jeweilige Hydraulik-Druck (p) begrenzt wird.

3. Hydraulisches Betriebssystem nach Anspruch 1 oder 2, dadurch gekennzeichnet, daß in der Maschinensteuerung (7) die aktuelle Leistung (P) gemäß der Beziehung

$$P = p \times Q \text{ und/oder } P = n \times M$$

   aus den zyklusgemäßen Solldaten für Druck (p) und Hydraulik-Volumenstrom (Q) bzw. aus Drehzahl (n) und Drehmoment (M) gebildet und der Regelung des Elektromotors (2) zugrundegelegt wird,
wobei die Maschinensteuerung (7) auf die hinterlegten Daten im Speichermittel (8) zurückgreift.

4. Hydraulisches Betriebssystem nach Anspruch 3, dadurch gekennzeichnet, daß die jeweilige aktuell benötigte Leistung (P) als Leistungsgrenzwert vorgegeben wird, der nicht überschritten werden darf, wodurch die Leistung (P) begrenzt wird.

5. Hydraulisches Betriebssystem nach Anspruch 3, dadurch gekennzeichnet, daß die Maschinensteuerung (7) einen Alarm auslöst, falls bei der Ermittlung der Leistung (P) ein Wert festgestellt wird, der über einem voreingestellten Maximalwert liegt.

6. Hydraulisches Betriebssystem nach Anspruch 3, dadurch gekennzeichnet, daß in der Maschinensteuerung (7) die über einen Arbeitszyklus aufgenommene Energie (W) gemäß der Beziehung

$$W = \int P \, dt$$

aus den berechneten Leistungswerten (P) über der Zeit (t) ermittelt und ausgegeben wird.

7. Hydraulisches Betriebssystem nach einem der Ansprüche 1 bis 6, dadurch gekennzeichnet, daß die Hydraulikpumpe (1) eine Innenzahnradpumpe ist.

8. Hydraulisches Betriebssystem nach einem der Ansprüche 1 bis 7, dadurch gekennzeichnet, daß der Elektromotor (2) ein vektorgeregelter Drehstromkurzschlußläufermotor ist.

9. Hydraulisches Betriebssystem nach einem der Ansprüche 1 bis 7, dadurch gekennzeichnet, daß der Elektromotor (2) ein frequenzgeregelter Drehstromkurzschlußläufermotor ist.

10. Hydraulisches Betriebssystem nach einem der Ansprüche 1 bis 7, dadurch gekennzeichnet, daß der Elektromotor (2) ein Drehstromservomotor ist.

11. Hydraulisches Betriebssystem nach einem der Ansprüche 1 bis 10, dadurch gekennzeichnet, daß der Elektromotor (2) über einen oder mehrere programmierbare, auf die Drehzahlregelung und/oder die Drehmomentenregelung wirkende Rampenbildner angesteuert wird.

12. Hydraulisches Betriebssystem nach einem der Ansprüche 1 bis 11, dadurch gekennzeichnet, daß die Hydraulikpumpe (1) unmittelbar an den Elektromotor (2) angeflanscht oder mit diesem über einen Pumpenträger verbunden ist.

13. Hydraulisches Betriebssystem nach einem der Ansprüche 1 bis 12, dadurch gekennzeichnet, daß die Drehzahlregelung und/oder die Drehmomentenregelung des Elektromotors (2) einer Soll/Istwert-Steuerung unterliegt, die gegebenenfalls wiederum durch Sensoren an den Hydraulikantrieben (3, 4, 5) beeinflußbar ist.

EP 0 752 304 A1

*Fig.*

Europäisches
Patentamt

**EUROPÄISCHER RECHERCHENBERICHT**

Nummer der Anmeldung

EP 96 10 8063

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | GB-A-1 392 404 (PARKER HANNIFIN CORP) 30.April 1975 * das ganze Dokument * --- | 1,3 | B29C45/82 B29C45/76 |
| D,Y | DE-A-43 35 328 (BATTENFELD GMBH) 20.April 1995 * das ganze Dokument * --- | 1-13 | |
| Y | AT-B-399 312 (ENGEL GMBH MASCHBAU) 25.April 1995 * das ganze Dokument * --- | 1-13 | |
| A | DE-B-11 14 903 (SCHWEIGER) 12.Oktober 1961 * das ganze Dokument * --- | 2-6 | |
| Y | PATENT ABSTRACTS OF JAPAN vol. 004, no. 125 (M-030), 3.September 1980 & JP-A-55 084642 (HITACHI LTD), 26.Juni 1980, * Zusammenfassung; Abbildungen * --- | 1-6,10, 12,13 | |
| Y | AT-B-394 825 (ENGEL GMBH MASCHBAU) 25.Juni 1992 * das ganze Dokument * --- | 1-6,10, 12,13 | RECHERCHIERTE SACHGEBIETE (Int.Cl.6) B29C B30B F04B |
| Y | US-A-3 911 677 (COLLINS GEORGE T) 14.Oktober 1975 * das ganze Dokument * --- | 1-5 | |
| Y | PATENT ABSTRACTS OF JAPAN vol. 017, no. 410 (M-1455), 30.Juli 1993 & JP-A-05 084799 (UBE IND LTD), 6.April 1993, * Zusammenfassung; Abbildung * --- -/-- | 1-5 | |

Der vorliegende Recherchenbericht wurde für alle Patentansprüche erstellt

| Recherchenort | Abschlußdatum der Recherche | Prüfer |
|---|---|---|
| DEN HAAG | 11.Oktober 1996 | Mathey, X |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

............................................................................
& : Mitglied der gleichen Patentfamilie, übereinstimmendes Dokument

EPO FORM 1503 03.82 (P04C03)

Europäisches
Patentamt

**EUROPÄISCHER RECHERCHENBERICHT**

Nummer der Anmeldung

EP 96 10 8063

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP-A-0 403 041 (MANNESMANN AG) 19.Dezember 1990<br>* das ganze Dokument *<br>--- | 1,10-13 | |
| Y | US-A-4 518 318 (JENSEN NIELS D  ET AL) 21.Mai 1985<br>* das ganze Dokument *<br>----- | 1,10-13 | |

RECHERCHIERTE SACHGEBIETE (Int.Cl.6)

Der vorliegende Recherchenbericht wurde für alle Patentansprüche erstellt

| Recherchenort | Abschlußdatum der Recherche | Prüfer |
|---|---|---|
| DEN HAAG | 11.Oktober 1996 | Mathey, X |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..............................................................................
& : Mitglied der gleichen Patentfamilie, übereinstimmendes
    Dokument

EPO FORM 1503 03.82 (P04C03)